# EUROPEAN PATENT APPLICATION

(11) **EP 3 708 515 A1**
(43) Date of publication of application: **16.09.2020**
(21) Application number: 18876602.6
(22) Date of filing: 01.11.2018
(51) Int. Cl.: B65D 75/36, B65D 65/40, B65D 81/24

(54) **COVER MATERIAL FOR BLISTER PACKS**

(30) Priority: 10.11.2017 JP 2017217600
(71) Applicant: Kyodo Printing Co., Ltd., Tokyo 112-8501 (JP)
(72) Inventor: YASUDA, Atsushi, Tokyo 112-8501 (JP); SUZUKI, Kenta, Tokyo 112-8501 (JP); KONDO, Shinichi, Tokyo 112-8501 (JP)
(74) Representative: Krauns, Christian
(86) International application number: PCT/JP2018/040741
(87) International publication number: WO 2019/093227

(57) **Abstract**

A cover material (10) for blister packs according to the present invention is sequentially provided with a base material layer (18), an absorption layer (12) and an easily releasable layer (14) in this order. This cover material for blister packs is configured such that: the absorption layer (12) has a skin layer (16) on the easily releasable layer-side surface; the absorption layer (12) contains a resin for absorption layers and an absorbent; the skin layer (16) contains a resin for skin layers, but does not contain an absorbent; and the easily releasable resin layer contains an easily releasable resin.

## Description

### FIELD

The present invention relates to a cover material for blister packs.

### BACKGROUND

Conventionally, blister packs have been used as packaging containers for solid formulations such as tablets and for capsules containing medicines. The blister pack can be formed by forming a recess called a pocket in a blister package sheet composed of a resin sheet or the like to form a blister package, putting the contents in the pocket, and bonding a cover material (lid material) by heat sealing or the like.

In the state of a formulation or the like being accommodated inside the pocket of the blister package, a cover member is heat-sealed to a skirt portion extending around the pocket to provide a contents-containing blister pack in which the formulation or the like is enclosed. When the blister package and/or cover material used for packaging is transparent, the formulation enclosed thereinside can be easily seen. The means mainly employed for taking out the contents from the blister pack is to deform the pocket of the blister package by pressing it from the outside to the cover material side, break the cover material with the content, and take out the contents (push-through).

The active ingredient of the formulation enclosed in the blister pack includes various ingredients. Among these, some active ingredients have low moisture resistance and some active ingredients have strong odor. There has therefore been proposed a technique of previously providing an absorbent layer that absorbs moisture, odor or the like, with a blister package sheet or a cover material and thereby providing an absorptive function to a blister pack after molding.

Patent Literature 1 discloses a technique of protecting a moisture-sensitive product from moisture by laminating a plastic material layer containing a moisture-absorbing desiccant on a blister pack cover material.

### [CITATION LIST]

### [PATENT LITERATURE]

[PTL 1] JP 2012-520802 A

### SUMMARY

### [TECHNICAL PROBLEM]

In order to enable taking out the contents from the blister pack which has the cover material for blister packs of Patent Literature 1, by means of a push-through of breaking the cover material, the thickness of the plastic material layer containing a desiccant needs to be controlled to be thin, and this may make it impossible to achieve both easy opening property and desired absorption performance of the cover material.

In addition, when the cover material for blister packs of Patent Literature 1 is pushed through as is conventionally done, the plastic material layer is broken, as a result, the desiccant contained in the plastic material layer sometimes comes into contact with the contents.

Accordingly, there is a need to provide a cover material for blister packs having a desired absorption performance and being easily openable without breaking the absorption layer.

### [SOLUTION TO PROBLEM]

As a result of intensive investigations, the present inventors have discovered that the above-described problems can be solved by the following means and have accomplished the present invention. More specifically, the present invention is as follows:
<Aspect 1> A cover material for blister packs including,
   in order, a substrate layer (base material layer), an absorbent layer, and an easy-peel layer (easily releasable layer), wherein:
   a skin layer is present on the easy-peel layer side of the absorbent layer,
   the absorbent layer contains an absorbent layer resin and an absorbent,
   the skin layer contains a skin layer resin and does not contain an absorbent, and
   the easy-peel layer contains an easy-peel resin.
<Aspect 2> The cover material according to Aspect 1, another skin layer is further present on the substrate layer side of the absorbent layer.
<Aspect 3> The cover material according to Aspect 1 or 2, wherein, when the easy-peel layer is fused to a blister package including at least a polyvinyl chloride layer and having a pocket, thereby forming
   a bonded portion in which the blister package and the easy-peel layer are bonded, and
   an unbonded portion which corresponds to the pocket of the blister package and in which the blister package and the easy-peel layer are not bonded, and then
   the cover material is peeled off from the polyvinyl chloride layer of the blister package,
   (i) the blister package can be interfacially peeled off from the easy-peel layer, or
   (ii) in the bonded portion, at least a part of the easy-peel layer can follow the blister package, whereas in the unbonded portion, the entirety of the easy-peel layer can follow the absorbent layer.
<Aspect 4> The cover material according to any one of Aspects 1 to 3, wherein the easy-peel resin is composed of an acryl-modified polyolefin.
<Aspect 5> The cover material according to Aspect 4, wherein the thickness of the easy-peel layer is from 0.1 to 10 µm.
<Aspect 6>The cover material according to any one of Aspects 1 to 3, wherein the easy-peel resin is composed of an ethylene-fatty acid vinyl copolymer.
<Aspect 7> The cover material according to Aspect 6, wherein the thickness of the easy-peel layer is from 5 to 100 µm.
<Aspect 8> A contents-containing blister pack, which is a blister pack including contents, a blister package, and a cover material, wherein
   the blister package includes at least a polyvinyl chloride layer and has a pocket,
   the cover material includes, in order, a substrate layer, an absorbent layer, and an easy-peel layer,
   a skin layer is present on the easy-peel layer side of the absorbent layer,
   the absorbent layer contains an absorbent layer resin and an absorbent,
   the skin layer contains a skin layer resin,
   the easy-peel layer contains an easy-peel resin,
   the easy-peel layer is fused to the polyvinyl chloride layer of the blister package, thereby accommodating the contents in the pocket and forming
   a bonded portion in which the blister package and the easy-peel layer are bonded, and
   an unbonded portion which corresponds to the pocket of the blister package and in which the blister package and the easy-peel layer are not bonded, and
   when the cover material is peeled off from the blister package,
   (i) the blister package can be interfacially peeled off from the easy-peel layer, or
   (ii) in the bonded portion, at least a part of the easy-peel layer can follow the blister package, whereas in the unbonded portion, the entirety of the easy-peel layer can follow the absorbent layer.
<Aspect 9> A combination of a cover material for blister packs and a blister package including at least a polyvinyl chloride layer and having a pocket, wherein
   the cover material includes, in order, a substrate layer, an absorbent layer, and an easy-peel resin layer,
   a skin layer is present on the easy-peel layer side of the absorbent layer,
   the absorbent layer contains an absorbent layer resin and an absorbent,
   the skin layer contains a skin layer resin,
   the easy-peel resin layer contains an easy-peel resin,
   when the easy-peel layer is fused to the polyvinyl chloride layer of the blister package, thereby forming
   a bonded portion in which the blister package and the easy-peel layer are bonded, and
   an unbonded portion which corresponds to the pocket of the blister package and in which the blister package and the easy-peel layer are not bonded, and
   then the cover material is peeled off from the blister package,
   (i) the blister package can be interfacially peeled off from the easy-peel layer, or
   (ii) in the bonded portion, at least a part of the easy-peel layer can follow the blister package, whereas in the unbonded portion, the entirety of the easy-peel layer can follow the absorbent layer.

### [ADVANTAGEOUS EFFECTS OF INVENTION]

According to the present invention, a cover material for blister packs having a desired absorptive function and being easily openable without breaking the absorbent layer, can be provided.

### BRIEF DESCRIPTION OF DRAWINGS

[FIG. 1] FIG. 1 is a diagram illustrating a layer structure in one embodiment of the blister pack of the present invention.
[FIG. 2] FIG. 2 is a diagram illustrating a peeling mechanism in one embodiment of the blister pack of the present invention.
[FIG. 3] FIG. 3 is a diagram illustrating the peeling mechanism in embodiment (ii) below of the blister pack of the present invention.
[FIG. 4] FIG. 4 is a diagram illustrating another peeling mechanism in embodiment (ii) below of the blister pack of the present invention.

### DESCRIPTION OF EMBODIMENTS

### « Cover material for blister packs»

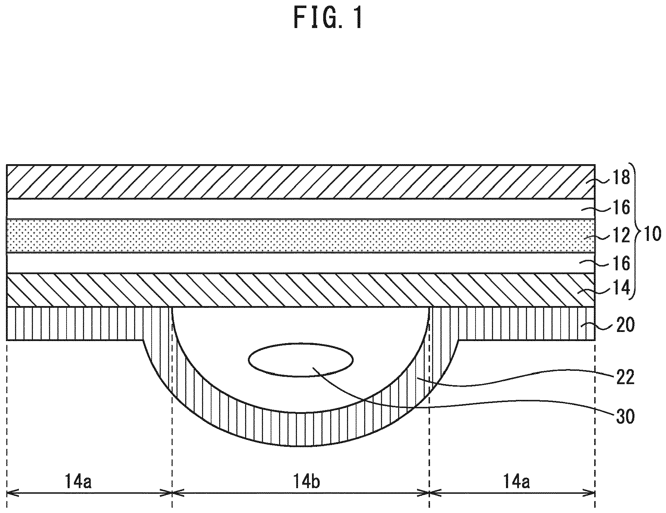

As illustrated in FIG. 1, the cover material 10 for blister packs of the present invention is a cover material 10 for blister packs including a substrate layer 18, an absorbent layer 12, and an easy-peel layer 14. A skin layer 16 is present on the easy-peel layer 14 side of the absorbent layer 12. The absorbent layer 12 contains an absorbent layer resin and an absorbent. The skin layer 16 contains a skin layer resin and does not contain an absorbent. The easy-peel layer 14 contains an easy-peel resin, particularly an easy-peel resin fusable to polyvinyl chloride.

Another skin layer 16 may be further present on the substrate layer 18 side of the absorbent layer 12.

Here, within the context of the present invention, the term "easy-peel layer" means a layer which can separate the substrate layer and the absorbent layer from the blister package for opening the cover material by, after the polyvinyl chloride layer of the blister package including at least a polyvinyl chloride layer and having a pocket is bonded to the easy-peel layer side of the cover material, and then causing cohesive fracture of the easy-peel layer, and/or interfacial peeling of the blister package from the easy-peel layer, and/or delamination of the easy-peel layer and the skin layer.

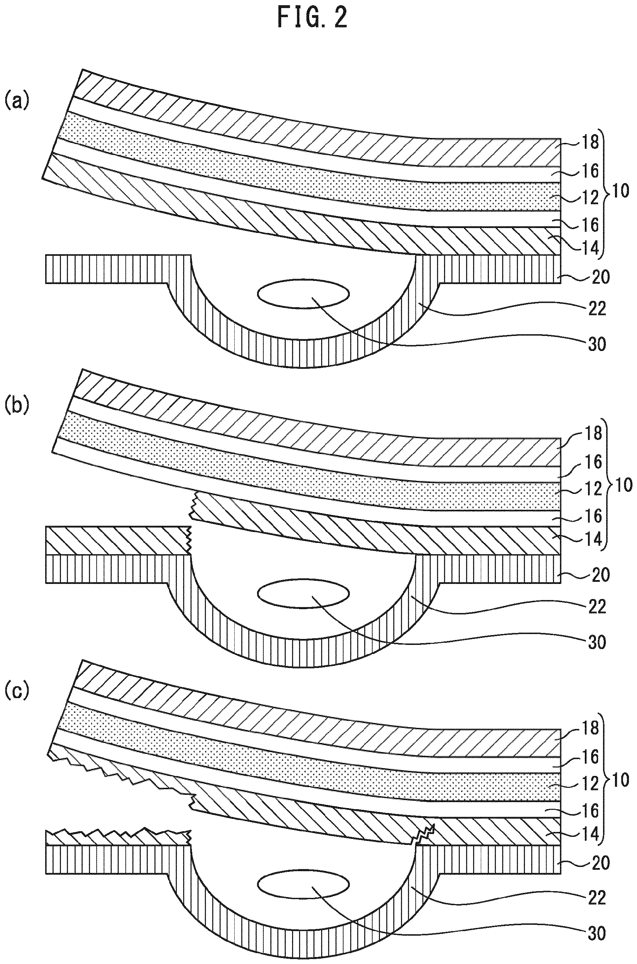

More specifically, the easy-peel layer is a layer capable of causing interfacial peeling of the blister package 20 from the easy-peel layer 14 as illustrated in FIG. 2(a), delamination of the skin layer 16 from the easy-peel layer 14 as illustrated in FIG. 2(b), and/or cohesive fracture of the easy-peel layer 14 as illustrated in FIG. 2(c). In either embodiment illustrated in FIGS. 2(b) and (c), the easy-peel layer 14 may be a layer that is broken to correspond with the pocket 22 of the blister package 20.

The cover material for blister packs of the present invention can be easily opened without breaking the absorbent layer due to the presence of the easily easy-peel layer even when the thickness of the absorbent layer is designed to be thick so as to ensure the desired absorption performance.

In a preferred embodiment of the present invention, when the easy-peel layer is fused to a blister package having a pocket, thereby forming a bonded portion in which the blister package and the easy-peel layer are bonded, and an unbonded portion which corresponds to the pocket of the blister package and in which the blister package and the easy-peel layer are not bonded, and then the cover material is peeled off from the blister package,
(i) As mentioned with respect to FIG. 2(a), the blister package can be interface peeled from the easy-peel layer or
(ii) in the bonded portion, at least a part of the easy-peel layer can follow the blister package, whereas in the unbonded portion, the entirety of the easy-peel layer can follow the absorbent layer.

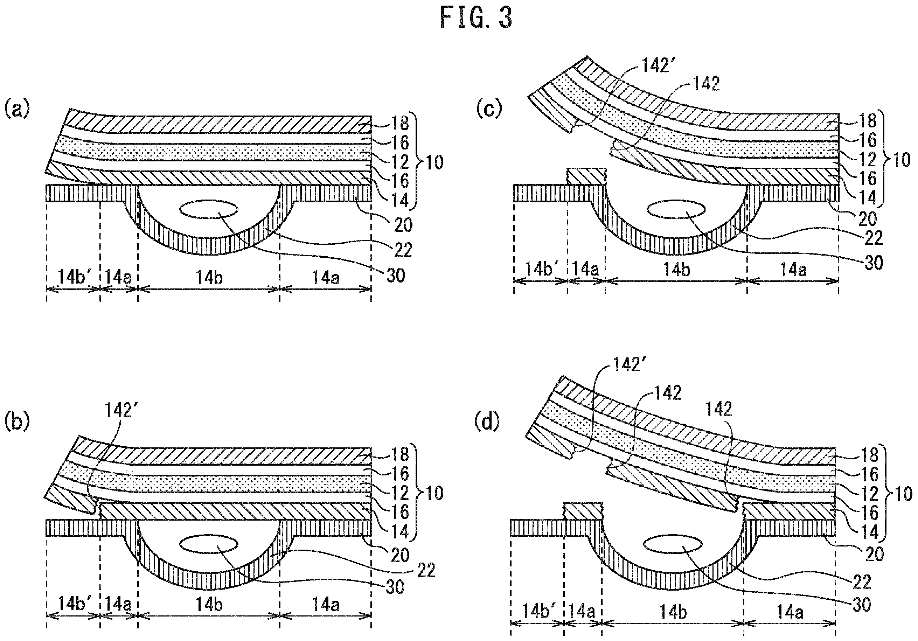

Embodiment (ii) above is described by referring to FIG. 3.

As illustrated in FIG. 3(a), the blister package 20 having a pocket 22 is bonded to the cover material 10, thereby forming a bonded portion 14a in which the blister package 20 and the easy-peel layer 14 are bonded, and an unbonded portion 14b which corresponds to the pocket 22 of the blister package 20 and in which the blister package 20 and the easy-peel layer 14 are not bonded, and when the cover material 10 is peeled off, the skin layer 16 undergoes delamination from the easy-peel layer 14 in a region corresponding to the bonded portion 14a.

In order to realize this delamination, it is also possible to further provide an unbonded portion 14 b' between the blister package and the easy-peel layer and use it as a peeling trigger. In the case of this embodiment, when the peeled surface reaches the boundary between the unbonded portion 14b' and the bond portion 14a, as illustrated in FIG. 3(b), a breaking part 142' is formed in the easy-peel layer 14, and the skin layer 16 undergoes delamination from the easy-peel layer 14 in a region corresponding to the bonded portion 14a.

When the skin layer 16 is caused to further undergo delamination, as illustrated in FIG. 3(b), the peeled surface eventually reaches the boundary between bonded portion 14a and unbonded portion 14b and, as illustrated in FIG. 3(c), a breaking part 142 is formed in easy-peel layer 14. Then, in the unbonded portion 14b, the easy-peel layer 14 follows the skin layer 16.

When the peeling is allowed to further proceed, the breaking part 142 reaches the opposite edge of the pocket 22 and, as illustrated in FIG. 3(d), the easy-peel layer 14 is severed to correspond with the pocket 22.

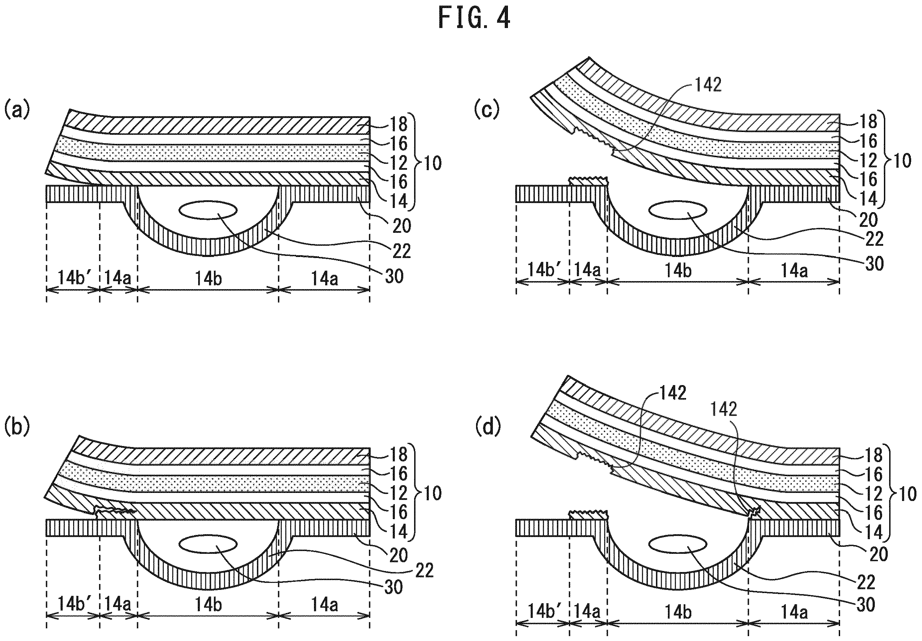

Furthermore, in another form of embodiment (ii) above, as illustrated in FIGs. 4(b) and (d), in the bonded portion 14a, a part of the easy-peel layer 14 follows the blister package 20, whereas in the unbonded portion 14b, the entirety of the easy-peel layer 14 follows the absorbent layer 12.

According to embodiment (ii) above, particularly, even when the blister package and the easy-peel layer are bonded to each other by fusing, the cover material for blister packs can be peeled off with stable strength almost without depending on the conditions such as heat sealing temperature, pressure, time, etc.

In certain embodiments of the present invention, the easy-peel layer may be fusible to polyvinyl chloride having good formability. Specific embodiments are referred to below.

In one embodiment of the present invention, the easy-peel resin is preferably composed of an acryl-modified polyolefin. According to this embodiment, good fusing property to polyvinyl chloride having good formability can be realized with a thin film thickness, as a result, cost reduction and good production speed can be achieved.

In one embodiment of the present invention, the easy-peel resin is preferably composed of an ethylene-fatty acid vinyl copolymer. According to this embodiment, the easy-peel layer can be laminated by the same means as that for the conventional easy peel film, and good fusing property to polyvinyl chloride having good formability can be easily realized.

Each constituent element of the present invention is described below.

### <Substrate layer>

The substrate layer may be composed of only a barrier layer or only a resin layer or may be composed of a barrier layer and a resin layer.

### (Barrier layer)

As the barrier layer, a material capable of suppressing permeation of moisture, an organic gas, and an inorganic gas from the outside into the absorbent layer can be used. The barrier layer which can be used includes, for example, but is not limited to, a metal foil such as aluminum foil and aluminum alloy, an inorganic vapor-deposited film such as aluminum vapor-deposited film, silica vapor-deposited film, alumina vapor-deposited film or silica-alumina binary vapor-deposited film, and an organic coating film such as polyviny lidene chloride-coated film or polyvinylidene fluoride-coated film. In particular, from the viewpoint of making it easier to achieve both the barrier property and the handling property as the cover material, the barrier layer used is preferably an aluminum foil.

The thickness of the barrier layer is preferably 7 µm or more, 10 µm or more, or 15 µm or more, from the viewpoint of ensuring strength and barrier property, and is preferably 45 µm or less, 40 µm or less, or 35 µm or less, from the viewpoint of improving the handling property as the cover material.

### (Resin layer)

As the resin layer, thermoplastic resins excellent in impact resistance, abrasion resistance, etc., for example, polyolefin, vinyl-based polymer, polyester, and polyamide, can be used individually or as a multilayer combination of two or more kinds thereof. The resin layer may be a stretched film or an unstretched film. This resin layer can protect the barrier layer.

The polyolefin includes a polyethylene-based resin, a polypropylene-based resin, etc.

In the present description, the polyethylene-based resin indicates a resin containing more than 50 mol%, more than 60 mol%, more than 70 mol%, or more than 80 mol%, of a repeating unit of ethylene group in the main chain of the polymer and, for example, is selected from the group consisting of low-density polyethylene (LDPE), linear low-density polyethylene (LLDPE), medium-density polyethylene (MDPE), high-density polyethylene (HDPE), ethylene-acrylic acid copolymer (EAA), ethylene-methacrylic acid copolymer (EMAA), ethylene-ethyl acrylate copolymer (EEA), ethylene-methyl acrylate copolymer (EMA), their derivatives, and mixtures thereof.

In the present description, the propylene-based resin indicates a resin containing more than 50 mol%, 60 mol% or more, 70 mol% or more, or 80 mol% or more, of a repeating unit of propylene group in the main chain of the polymer and includes, for example, polypropylene (PP) homopolymer, random polypropylene (random PP), block polypropylene (block PP), chlorinated polypropylene, acid-modified polypropylene, their derivatives, and mixtures thereof.

The vinyl-based polymer includes, for example, polyvinyl chloride (PVC), polyvinylidene chloride (PVDC), polychlorotrifluoroethylene, polytetrafluoroethylene, polyacrylonitrile (PAN), etc.

The polyester includes, for example, polyethylene terephthalate (PET), polybutylene terephthalate, etc.

The polyamide includes, for example, nylon such as nylon (registered trademark) 6 and nylon MXD6.

The thickness of the resin layer is preferably 7 µm or more, 10 µm or more, or 15 µm or more, from the viewpoint of satisfactorily protecting the barrier layer, and is preferably 55 µm or less, 50 µm or less, or 45 µm or less, from the viewpoint of improving the handling property as the cover material.

### <Absorbent layer>

The absorbent layer is a layer containing an absorbent layer resin and an absorbent. The absorbent may be dispersed in the absorbent layer resin.

The content percentage of the absorbent in the absorbent layer is, based on the mass of the entire absorbent layer, preferably 1 mass% or more, 3 mass% or more, 5 mass% or more, 7 mass% or more, or 10 mass% or more, from the viewpoint of ensuring a good absorption capacity, and is preferably 70 mass% or less, 65 mass% or less, 60 mass% or less, 55 mass% or less, or 50 mass% or less, from the viewpoint of ensuring a good film forming property.

The thickness of the absorbent layer is preferably 1 µm or more, 2 µm or more, 3 µm or more, 5 µm or more, 10 µm or more, 20 µm or more, or 30 µm or more, from the viewpoint of ensuring a good absorption capacity, and is preferably 100 µm or less, 90 µm or less, or 80 µm or less, from the viewpoint of ensuring flexibility of the cover material.

### (Absorbent layer resin)

As the absorbent layer resin, for example, a thermoplastic resin can be used alone or as a mixture.

The thermoplastic resin includes, for example, polyethylene-based resin, polypropylene-based resin, saturated or unsaturated polyester, ionomer, polyvinyl chloride (PVC), polystyrene, their derivatives, and mixtures thereof.

In the case where the absorbent layer absorbs water vapor, the water vapor permeability in conformity with JIS K 7129 of the resin is, when measured on a film having a thickness of 25 µm at 40°C and relative humidity of 90%, preferably 5 g/(m²·day) or more, 10 g/(m²·day) or more, or 15 g/(m²·day) or more, from the viewpoint of ensuring a good absorption rate, and is preferably 100 g/(m²·day) or less, 90 g/(m²·day) or less, or 80 g/(m²·day) or less, from the viewpoint of preventing deactivation in the manufacturing process.

In the case where the absorbent layer absorbs oxygen, the oxygen permeability in conformity with JIS K7126-1 of the resin is, when measured on a film having a thickness of 25 µm at 25°C and a relative humidity of 0%, preferably 5,000 cc/(m²·day·MPa) or more, 10,000 cc/(m²·day MPa) or more, or 30,000 cc/(m²·day·MPa) or more, from the viewpoint of ensuring a favorable absorption rate, and is preferably 230,000 cc/(m²·day·MPa) or less, 200,000 cc/(m²·day·MPa) or less, or 150,000 cc/(m²·day·MPa) or less, from the viewpoint of preventing deactivation in the manufacturing process.

### (Absorbent)

As the absorbent, for example, a moisture absorbent and a gas absorbent can be used.

As the moisture absorbent, a physical moisture absorbent such as hydrophilic zeolite and silica gel, and a chemical moisture absorbent such as calcium oxide, magnesium sulfate, calcium chloride, calcium oxide and aluminum oxide, can be used.

As the hydrophilic zeolite, for example, a zeolite of type A, type X, or type LSX can be used. These may be used individually or in combination.

As the gas absorbent, a physical gas absorbent such as activated carbon and hydrophobic zeolite, an iron-based oxygen absorbent, and a chemical gas absorbent such as metal halide, metal oxide, sulfate, sulfite, bisulfite and dithionite, can be used.

As the hydrophobic zeolite, for example, beta-type, ZSM-5 type, ferrienite-type, mordenite-type, L-type or Y-type zeolite can be used. In addition, ZSM-11, silicalite, silicalite-2, and pentasil-type metallosilicate, which are analogs of ZSM-5 type zeolite, can also be used. These may be used individually or in combination.

As the iron-based oxygen absorbent, iron powder (e.g., reduced iron powder, atomized iron powder, activated iron powder), ferrous oxide, ferrous salt, etc. can be used.

As the metal halide, for example, calcium chloride, sodium chloride, sodium bromide, sodium iodide, potassium chloride, potassium bromide, potassium iodide, calcium chloride, magnesium chloride, barium chloride, etc. can be used.

As the metal oxide, for example, calcium oxide, aluminum oxide, cerium oxide having an oxygen defect, titanium oxide having an oxygen defect, etc. can be used.

### <Skin layer>

The skin layer is a layer containing a skin layer resin and not containing an absorbent. The skin layer is a layer existing on the easy-peel resin layer side of the absorbent layer for the purpose of preventing falling off or the like of the absorbent contained in the absorbent layer from. The skin layer may further be present on the substrate layer side of the absorbent layer. The skin layer may also be fused to the absorbent layer.

The thickness of the skin layer may be 1 µm or more, 3 µm or more, 5 µm or more, or 7 µm or more, and may be 50 µm or less, 40 µm or less, 30 µm or less, 20 µm or less, or 15 µm or less. In the case where the skin layer is present on both sides of the absorbent layer, the thicknesses of these skin layers may be the same or different.

### (Skin layer resin)

As the skin layer resin, the thermoplastic resins recited with respect to the resin layer can be used individually or as a mixture thereof. In the case where the skin layer is present on both sides of the absorbent layer, the skin layer resins constituting respective skin layers may be the same or different.

### <Easy-peel resin layer>

The easy-peel layer (easy release layer) is a layer containing an easy-peel resin. The easy-peel resin is preferably composed of an acryl-modified polyolefin or an ethylene-fatty acid vinyl copolymer.

In the embodiment where the easy-peel resin is composed of an acryl-modified polyolefin, the easy-peel layer may be present as a coating or as a film.

The thickness of the easy-peel layer may be, in the form of a coating, 0.1 µm or more, 0.3 µm or more, 0.5 µm or more, 0.7 µm or more, or 1.0 µm or more, and may be 20.0 µm or less, 10.0 µm or less, 8.0 µm or less, 5.0 µm or less, or 3.0 µm or less, and in the form of a film, the thickness may be 5 µm or more, 7 µm or more, 10 µm or more, 15 µm or more, 20 µm or more, 30 µm or more, or 40 µm or more, and may be 100 µm or less, 90 µm or less, 80 µm or less, 70 µm or less, 60 µm or less, or 50 µm or less.

In the embodiment where the easy-peel resin is composed of an ethylene-fatty acid vinyl copolymer, the thickness of the easy-peel layer may be 5 µm or more, 7 µm or more, 10 µm or more, 15 µm or more, 20 µm or more, 30 µm or more, or 40 µm or more, and may be 100 µm or less, 90 µm or less, 80 µm or less, 70 µm or less, 60 µm or less, or 50 µm or less.

### (Easy-peel resin)

The easy-peel resin may be a resin capable of being fused to polyvinyl chloride. As such an easy-peel resin, for example, an acryl-modified polyolefin, an ethylene-fatty acid vinyl copolymer, etc. can be used.

The acryl-modified polyolefin may generally be a polyolefin in which a (meth)acrylic monomer is graft-polymerized to a side chain.

The ethylene-fatty acid vinyl copolymer is generally a copolymer of an ethylene monomer and a fatty acid vinyl monomer. Such ethylene-fatty acid vinyl copolymer includes an ethylene-saturated fatty acid vinyl copolymer, an ethylene-unsaturated fatty acid vinyl copolymer, etc.

The ethylene-saturated fatty acid vinyl copolymer includes, for example, an ethylene-vinyl acetate copolymer, an ethylene-vinyl propionate copolymer, etc.

The ethylene-unsaturated fatty acid vinyl copolymer includes an ethylene-vinyl acrylate copolymer, an ethylene-vinyl methacrylate copolymer, and an ethylene-vinyl crotonate copolymer.

### <Other Layers>

The cover material for blister packs of the present invention may have other optional layers. Other layers include, for example, an adhesive layer present between respective layers.

### «Manufacturing method of cover material for blister packs»

The cover material for blister packs of the present invention can be manufactured by a method including a film-forming step of film-forming an absorbent layer and a skin layer, a first lamination step of laminating an easy-peel layer to the skin layer, and a second lamination step of laminating a substrate layer to the absorbent layer or the skin layer. Either the first lamination step or the second lamination step may be performed first, or these may be performed simultaneously.

### <Film-forming step>

The film-forming step can be performed by kneading the resins constituting the absorbent layer and the skin layer by means of, for example, a batch-type kneader such as kneader, Banbury mixer and mixing roll conical mixer, or a continuous kneader such as twin-screw kneader, and then forming the kneaded resin into a film shape by a co-extrusion method such as multilayer inflation method or multilayer T-die method, in a manner of integrating the absorbent layer and the skin layer.

### <First lamination step>

The first lamination step may be performed by a dry lamination method, a sand lamination method, or the like via an adhesive layer or may be performed by applying an easy-peel layer resin to the skin layer by means of printing such as gravure printing, offset printing, flexographic printing, or silk printing.

### <Second lamination step>

The second lamination step can be performed, for example, by laminating the substrate layer and the absorbent layer or skin layer via an adhesive layer by a dry lamination method, a sand lamination method, or the like.

### «Contents-containing blister pack»

The contents-containing blister pack has contents, a blister package, and a cover material. The blister package includes at least a polyvinyl chloride (PVC) layer and has a pocket. As the cover material, the cover material for blister packs described above can be used.

The easy-peel layer of the cover material is fused to the polyvinyl chloride layer of the blister package, thereby accommodating the contents in the pocket and forming
a bonded portion in which the blister package and the easy-peel layer are bonded, and
an unbonded portion which corresponds to the pocket of the blister package and in which the blister package and the easy-peel layer are not bonded, and
when the cover material is peeled off from the blister package,
(i) the blister package can be interfacially peeled off from the easy-peel layer, or
(ii) in the bonded portion, at least a part of the easy-peel layer can follow the blister package, whereas in the unbonded portion, the entirety of the easy-peel layer can follow the absorbent layer.

### <Contents>

The contents are not limited as long as they can be deteriorated by contact with the outside air, and may include food, cosmetics, hygiene products, medical equipment, medical appliance, electronic components, etc., in addition to medicaments. Furthermore, the medicament includes a cleaning agent, a pesticide, a reagent, etc., in addition to pharmaceutical formulations.

### <Blister package>

As the blister package, a blister package including at least a PVC layer and having a pocket can be used.

The blister package can be manufactured, for example, by forming a pocket for accommodating the contents, in a blister package sheet. The method for forming the pocket includes a flat-plate type air-pressure forming method, a plug assist compressed-air forming method, a drum-type vacuum molding method, a plug forming method, etc. Among these, the plug forming method using a round-tip cylindrical rod (plug material) made of an ultra-high-molecular-weight polyethylene resin having a viscosity average molecular weight of 1,000,000 or more is preferred for forming the pocket.

As the blister package, a blister package sheet composed of a single-layer PVC layer, or a multilayered blister package sheet in which a plurality of layers including at least a PVC layer are stacked, can be used.

The multilayered blister package sheet may have a substrate layer and a PVC layer. In addition, a barrier layer, a reinforcement layer, an absorbent layer, etc. may be arbitrarily provided between the substrate layer and the PVC layer, and, for example, the sheet has, in order, a substrate layer, a barrier layer, a reinforcement layer, an absorbent layer, and a PVC layer. The method for laminating together adjacent layers includes a dry lamination method, a sand lamination method, etc.

The thickness of the blister package sheet may be, for example, 500 µm or less, 400 µm or less, 300 µm or less, 200 µm or less, 150 µm or less, or 100 µm or less, and may be 50 µm or more, 60 µm, or 70 µm or more, from the viewpoint of suitable strength, elasticity, barrier property, etc. as a blister package.

### (PVC Layer for blister package)

The PVC layer for the blister package is a layer composed of PVC. Through this layer, the blister package can be fused to the blister pack cover material of the present invention. The content percentage of PVC in the PVC layer for the blister package may be, based on the mass of the entire sealing resin layer for the blister package, 50 mass% or more, 60 mass% or more, 70 mass% or more, 80 mass% or more, or 90 mass% or more, and may be 100 mass% or less, 98 mass% or less, or 95 mass% or less.

The thickness of the PVC layer may be 300 µm or less, 200 µm or less, 150 µm or less, 130 µm or less, or 100 µm or less, and may be 10 µm or more, 20 µm or more, 30 µm or more, 40 µm or 50 µm or more, from the viewpoint of imparting appropriate formability to the blister package sheet.

### (Substrate layer for blister package)

The resin used in the substrate layer for the blister package is not particularly limited as long as it imparts an appropriate barrier property and formability to the blister package sheet. Examples thereof include polyethylene-based resin, polyvinyl chloride, polyvinylidene chloride, polypropylene-based resin, saturated polyester, polyamide (e.g., nylon (registered trademark), nylon 6, nylon 6,6, nylon MXD6), cyclic polyolefin (COP, COC), fluorine-based resin (e.g., polychlorotrifluoroethylene, polytetrafluoroethylene), etc., and mixtures thereof. These layers may be used as a single layer or may be used by stacking two or more layers thereof. A resin having excellent moisture resistance and preventing entering of moisture from the outside is preferred, and such a resin includes, in particular, polypropylene-based resin, polyamide, and saturated polyester.

The thickness of the substrate layer may be 10 µm or more, 20 µm or more, or 30 µm or more, and may be 300 µm or less, 200 µm or less, or 100 µm or less, from the viewpoint of maintaining the barrier property and giving strength or the like to the entire blister pack.

### (Barrier layer for blister package)

The material used in the barrier layer for the blister package may include a metal foil such as aluminum foil, a silica vapor-deposited film, an aluminum vapor-deposited film, an alumina vapor-deposited film, a silica-alumina vapor-deposited film, a vinylidene chloride-coated film, a polyvinylidene fluoride-coated film, etc., and combinations thereof. The thickness of the barrier layer may be 7 µm or more, 10 µm or more, or 20 µm or more, and may be 60 µm or less, 50 µm or less, or 40 µm or less, from the viewpoint of imparting appropriate formability and barrier property to the blister package sheet.

### (Reinforcement layer for blister package)

The reinforcing layer for the blister package is used to improve the formability of the blister package sheet. The resin used in the reinforcement layer includes, for example, high-density polyethylene, polyvinyl chloride, polypropylene-based resin, polyethylene terephthalate, polyamide (e.g., nylon (registered trademark), nylon 6, nylon 6,6, nylon MXD 6), etc., and mixtures thereof. The thickness of the reinforcement layer may be, for example, 10 µm or more, 15 µm or more, or 25 µm or more, and may be 60 µm or less, or 50 µm or less.

### (Other layers)

The multilayered blister package sheet may have other optional layers. Other layers include, for example, an absorbent layer containing an absorbent in a thermoplastic resin, a skin layer on the absorbent layer, an adhesive layer for adhering respective layers, and the like. The absorbent layer of the cover material and the absorbent layer of the blister package sheet may be the same or different in terms of, for example, layer thickness or type or content of the absorbent or resin.

### <Cover material>

The cover material may be the cover material for blister packs described above.

### «Combination»

The combination of the present invention is a combination of a cover material for blister packs and a blister package including at least a polyvinyl chloride layer and having a pocket.

In this combination, when the easy-peel layer is fused to the polyvinyl chloride layer of the blister package, thereby forming
a bonded portion in which the blister package and the easy-peel layer are bonded, and
an unbonded portion which corresponds to the pocket of the blister package and in which the blister package and the easy-peel layer are not bonded, and
then the cover material is peeled off,
(i) the blister package can be interfacically peeled off from the easy-peel layer, or
(ii) in the bonded portion, at least a part of the easy-peel layer can follow the blister package, whereas in the unbonded portion, the entirety of the easy-peel layer can follow the absorbent layer.

As the cover material for blister packs and the blister package, the above-mentioned cover material for blister packs and the blister package can be used, respectively.

### EXAMPLES

The present invention is specifically described by referring to Examples and Comparative Examples, but the present invention is not limited thereto.

### «Production of cover material for blister packs»

### <EXAMPLE 1>

A two-kind three-layer absorbent film was prepared by air-cooled inflation co-extrusion forming such that a skin layer, an absorbent layer and a skin layer are arranged in this order. As the skin layer, a linear low-density polyethylene was used, and as the resin for the absorbent layer, a resin prepared by melt-kneading a hydrophilic zeolite and an ethylene-methacrylic acid copolymer was used. The thickness of each layer was 10 µm for the skin layer, 30 µm for the absorbent layer, and 10 µm for the skin layer.

Next, the surface wettability of one skin layer of the prepared absorbent film was confirmed, and after applying a corona treatment, if desired, the aluminum foil side of a PET (12 µm)//aluminum foil (9 µm) laminate serving as a substrate layer was laminated on the skin layer side above by using a dry laminate adhesive.

Subsequently, an acryl-modified polyolefin as an easy-peel layer resin was applied on the other skin layer side and dried to laminate an easy-peel layer, and the cover material for blister packs of Example 1 was thereby prepared.

### <COMPARATIVE EXAMPLE 1>

The cover material for blister packs of Comparative Example 2 was prepared in the same manner as in Example 1 except that an absorbent film having a skin layer, an absorbent layer, and a skin layer in this order was not used and an easy-peel layer was directly laminated on the aluminum foil side of the substrate layer.

### <EXAMPLE 2 AND COMPARATIVE EXAMPLE 2>

The cover materials for blister packs of Example 2 and Comparative Example 2 were prepared in the same manner as in Example 1 and Comparative Example 1 except that an ethylene-vinyl acetate copolymer film was used instead of the acryl-modified polyolefin and laminated using a dry laminate adhesive, thereby laminating an easy-peel layer.

### COMPARATIVE EXAMPLE 3>

The cover material for blister packs of Comparative Example 3 was prepared in the same manner as in Example 1 except that the easy-peel layer was not laminated.

### «Evaluation»

### <Peel Test>

The easy-peel layer or skin layer side of the prepared cover material for blister packs was heat-sealed to the PVC layer side of a blister package sheet having a layer structure of nylon (25 µm)//aluminum foil (40 µm)//PVC (60 µm). The heat-sealing conditions were a temperature of 180°C on the cover material for blister packs side, a temperature of 40°C on the blister package sheet side, a duration of 1 second, and a pressure of 0.2 MPa.

Subsequently, the heat-sealed assembly of the cover material for blister packs and the blister package sheet was cut out to a width of 15 mm, and the easy peelability of the cover material was evaluated by conducting T-shape peeling under the condition of a tensile speed of 300 mm/min by use of a tensile tester, and measuring the heat seal strength.

In addition, with respect to Example 1 and Comparative Examples 1 and 3, those obtained by changing the heat sealing temperature to 140°C, 150°C, 160°C, and 170°C were also evaluated in the same manner.

The evaluation criteria are as follows:
good: Heat seal strength is from 1.5 to 10 N/15 mm.
bad: The heat sealing strength is 1.5 N/15 mm or less.

### <Moisture absorption test>

The cover material for blister packs prepared was cut out into 100 mm × 100 mm to obtain a sample for moisture absorption test, and the mass of the sample was measured.

The mass of the sample was measured after the sample was exposed to an environment at a temperature of 60°C and a relative humidity of 100 %RH for 6 hours.

The mass difference before and after the treatment was calculated, and the mass value obtained was converted to the mass per 1 m².

The evaluation criteria are as follows:
good: The moisture absorption is 1 g/m² or more.
bad: The moisture absorption is less than 1 g/m².

The results are given in Table 1.

### [Table 1]

**Table 1**

| | Configuration | | | | | Evaluation | | | | | |
|---|---|---|---|---|---|---|---|---|---|---|---|
| | Substrate layer | Skin layer | Absorbent layer | Skin layer | Easy-peel layer | Easy peelability at each heat sealing temperature | | | | | Absorbency |
| | | | | | | 140°C | 150°C | 160°C | 170°C | 180°C | |
| EXAMPLE 1 | PET //AL | LLDPE | Hydrophilic zeolite Ethylene-methacrylic acid Copolymer | LLDPE | Acryl-modified Polyolefin | good | good | good | good | good | good |
| Comparative Example 1 | | - | - | - | | good | good | good | good | good | bad |
| EXAMPLE 2 | | LLDPE | Hydrophilic zeolite + Ethylene-methacrylic acid Copolymer | LLDPE | Ethylene-Vinyl acetate Copolymer | - | - | - | - | good | good |
| Comparative Example 2 | | - | - | - | | - | - | - | - | good | bad |
| Comparative Example 3 | | LLDPE | Hydrophilic zeolite Ethylene-methacrylic acid Copolymer | LLDPE | - | bad | bad | bad | bad | bad | good |

It would be understood from Table 1 that the cover materials for blister packs of Examples 1 and 2 can satisfy both good heat seal strength to the PVC surface and absorbency.

Incidentally, in the cover materials for blister packs of Examples 1 and 2, the easy-peel layer was separated by cohesive fracture, and there was no breaking of the absorbent layer. Accordingly, it would be understood that the cover material for blister packs of the present invention can be easily opened without breaking the absorbent layer.

### REFERENCE SIGNS LIST

- 10: Cover material for blister packs
- 12: Absorbent layer
- 14: Easy-peel layer
- 14a: Bonded portion
- 14b, 14b': Unbonded portion
- 142, 142': Breaking part
- 16: Skin layer
- 18: Substrate layer
- 20: Blister package
- 22: Pocket
- 30: Contents

## Claims

1. A cover material for blister packs including,
in order, a substrate layer (base material layer), an absorbent layer, and an easy-peel layer (easily releasable layer), wherein:
a skin layer is present on the easy-peel layer side of the absorbent layer,
the absorbent layer contains an absorbent layer resin and an absorbent,
the skin layer contains a skin layer resin and does not contain an absorbent, and
the easy-peel layer contains an easy-peel resin.

2. The cover material as claimed in claim 1, another skin layer is further present on the substrate layer side of the absorbent layer.

3. The cover material as claimed in claim 1 or 2, wherein, when the easy-peel layer is fused to a blister package including at least a polyvinyl chloride layer and having a pocket, thereby forming
a bonded portion in which the blister package and the easy-peel layer are bonded, and
an unbonded portion which corresponds to the pocket of the blister package and in which the blister package and the easy-peel layer are not bonded, and then
the cover material is peeled off from the polyvinyl chloride layer of the blister package,
(i) the blister package can be interfacially peeled off from the easy-peel layer, or
(ii) in the bonded portion, at least a part of the easy-peel layer can follow the blister package, whereas in the unbonded portion, the entirety of the easy-peel layer can follow the absorbent layer.

4. The cover material as claimed in any one of claims 1 to 3, wherein the easy-peel resin is composed of an acryl-modified polyolefin.

5. The cover material as claimed in claim 4, wherein the thickness of the easy-peel layer is from 0.1 to 10 µm.

6. The cover material as claimed in any one of claims 1 to 3, wherein the easy-peel resin is composed of an ethylene-fatty acid vinyl copolymer.

7. The cover material as claimed in claim 6, wherein the thickness of the easy-peel layer is from 5 to 100 µm.

8. A contents-containing blister pack, which is a blister pack including contents, a blister package, and a cover material, wherein
the blister package includes at least a polyvinyl chloride layer and has a pocket,
the cover material includes, in order, a substrate layer, an absorbent layer, and an easy-peel layer,
a skin layer is present on the easy-peel layer side of the absorbent layer,
the absorbent layer contains an absorbent layer resin and an absorbent,
the skin layer contains a skin layer resin,
the easy-peel layer contains an easy-peel resin,
the easy-peel layer is fused to the polyvinyl chloride layer of the blister package, thereby accommodating the contents in the pocket and forming
a bonded portion in which the blister package and the easy-peel layer are bonded, and
an unbonded portion which corresponds to the pocket of the blister package and in which the blister package and the easy-peel layer are not bonded, and
when the cover material is peeled off from the blister package,
(i) the blister package can be interfacially peeled off from the easy-peel layer, or
(ii) in the bonded portion, at least a part of the easy-peel layer can follow the blister package, whereas in the unbonded portion, the entirety of the easy-peel layer can follow the absorbent layer.

9. A combination of a cover material for blister packs and a blister package including at least a polyvinyl chloride layer and having a pocket, wherein
the cover material includes, in order, a substrate layer, an absorbent layer, and an easy-peel resin layer,
a skin layer is present on the easy-peel layer side of the absorbent layer,
the absorbent layer contains an absorbent layer resin and an absorbent,
the skin layer contains a skin layer resin,
the easy-peel resin layer contains an easy-peel resin,
when the easy-peel layer is fused to the polyvinyl chloride layer of the blister package, thereby forming
a bonded portion in which the blister package and the easy-peel layer are bonded, and
an unbonded portion which corresponds to the pocket of the blister package and in which the blister package and the easy-peel layer are not bonded, and
then the cover material is peeled off from the blister package,
(i) the blister package can be interfacially peeled off from the easy-peel layer, or
(ii) in the bonded portion, at least a part of the easy-peel layer can follow the blister package, whereas in the unbonded portion, the entirety of the easy-peel layer can follow the absorbent layer.
